# EUROPEAN PATENT APPLICATION

(11) **EP 4 838 857 A1**
(43) Date of publication of application: **11.11.2026**
(21) Application number: 25175326.5
(22) Date of filing: 09.05.2025
(51) Int. Cl.: H04L 43/0817, G06F 11/30

(54) **METHOD FOR MONITORING NETWORK RESOURCES**

(71) Applicant: Siemens Aktiengesellschaft, 80333 München (DE)
(72) Inventor: Albrecht, Harald, 90475 Nürnberg (DE); Murarasu, Alin, 81827 München (DE); Preclik, Tobias, 91085 Weisendorf (DE)
(74) Representative: Siemens Patent Attorneys

(57) **Abstract**

The present disclosure provides a method for monitoring network system resources. Workload is identified as realtime workload and network system resources are discovered by a discovery process. The realtime workload is attributed to the discovered network system resources that process the realtime workload. The monitoring of the network system resources distinctly addresses realtime workload. The method allows for efficient tracking and management of resources handling time-sensitive operations in network systems.

## Description

The invention relates to monitoring network resources.

There is an increasing trend towards integrating Operations Technologie (OT) and information technology (IT) systems to leverage the benefits of virtualization, cloud computing, and advanced data analytics. This convergence presents new challenges in monitoring and managing real-time applications and workloads that are critical for industrial control, manufacturing processes, and time-sensitive communications.

Virtualization technologies allow multiple workloads to share physical hardware resources, improving efficiency and flexibility. When applied to OT environments, virtualization enables the deployment of virtual programmable logic controllers (vPLCs), numerical control kernels, and other automation applications on standard IT hardware. This approach offers potential cost savings and easier management compared to dedicated hardware appliances.

However, running real-time OT applications alongside general-purpose IT workloads introduces complexities in resource allocation and performance monitoring. Real-time applications have strict timing requirements that must be met to ensure proper operation of industrial processes. Traditional IT monitoring tools and practices may not provide sufficient visibility into the specific resources and performance metrics relevant to OT workloads.

Existing monitoring solutions often treat computing resources as interchangeable units, without distinguishing between different types of workloads or their specific resource requirements. This approach can make it challenging to identify and diagnose performance issues affecting real-time applications. Additionally, current tools may not adequately capture the relationships between network I/O, interrupt handling, and CPU utilization that are critical for real-time communication and control tasks.

Another difficulty arises from the diverse hardware environments in which virtualized OT applications may be deployed. Unlike purpose-built hardware solutions, virtualized applications must perform consistently across a range of customer-selected hardware configurations. This variability complicates performance tuning and troubleshooting efforts.

Furthermore, when performance issues occur in virtualized OT environments, it can be difficult to determine whether the root cause lies in hardware limitations, virtualization overhead, insufficient resource allocation, or software issues. This uncertainty can lead to extended downtime and inefficient problem-solving processes.

It has been appreciated that a method is needed that overcomes one or more of these problems.

It is therefore the object of the present invention to provide a method for monitoring network system resources that overcomes one or more of these problems.

This object of the present invention is solved with a method for monitoring network system resources with the features contained in claim 1.

Advantageous aspects of the invention are contained in the subsequent dependent claims, the following description and the drawing.

This object of the present invention is solved with a method for monitoring network system resources with the features contained in claim 1. Advantageous aspects of the invention are contained in the subsequent dependent claims, the following description and the drawing.

The method according to the invention is a method for monitoring network system resources. The method according to the invention includes identifying workload as realtime workload, discovering network system resources by a discovery process, attributing the realtime workload to the discovered network system resources that process the realtime workload, and monitoring the network system resources distinctly addressing realtime workload.

This method enables precise monitoring of realtime workloads in virtualized environments, allowing for better performance analysis and troubleshooting of critical OT applications running on IT infrastructure. By distinctly addressing realtime workload, the method provides insights that are not readily available with conventional IT monitoring tools. In particular, timing issues induced by e. g. industrial applications in the OT world can be reliably addressed by the method according to the invention.

In another advantageous aspect of the method according to the invention, workload is additionally identified as non-realtime workload, and the non-realtime workload is attributed to the discovered network system resources that process the non-realtime workload. The monitoring of the network system resources distinctly addresses also non-realtime workload. This comprehensive approach allows for a holistic view of system performance, differentiating between realtime and non-realtime workloads. This distinction is crucial for optimizing resource allocation and for ensuring that realtime applications meet their performance requirements without being impacted by other workloads.

In another advantageous aspect of the method according to the invention, the network system resources comprise computing resources. By including computing resources in the monitoring process, the method provides detailed insights into CPU utilization and performance for realtime workloads, enabling more effective resource management and capacity planning.

In another advantageous aspect of the method according to the invention, the network system resources comprise network IO resources. Monitoring network IO resources allows for the identification of potential bottlenecks in communication-intensive realtime applications, such as industrial control systems or manufacturing processes.

In another advantageous aspect of the method according to the invention, the discovery process comprises a computing resource discovery process. This aspect enables automatic detection and mapping of available computing resources, facilitating dynamic resource allocation for realtime workloads and simplifying system configuration.

In another advantageous aspect of the method according to the invention, the discovery process comprises a network IO resource discovery process. By automatically discovering network IO resources, the method ensures comprehensive monitoring of all communication pathways critical to realtime application performance.

In another advantageous aspect of the method according to the invention, the discovered network system resources that process the realtime workload is identified by tracking the workload. Tracking the workload allows for precise attribution of system resources to specific realtime tasks, providing granular performance data and enabling targeted optimization efforts.

In another advantageous aspect of the method according to the invention, the discovered network system resource/s that is/are identified to process the realtime workload is tagged for later or continuing reference. Tagging resources enables persistent monitoring and analysis of realtime workload performance over time, facilitating trend analysis and long-term system optimization.

In another advantageous aspect of the method according to the invention, the realtime workload is automation workload. This aspect tailors the monitoring method to the specific needs of industrial automation systems, ensuring that critical control processes receive the necessary attention and resources.

In another advantageous aspect of the method according to the invention, the realtime workload is industrial control workload and/or manufacturing workload and/or communication workload. By specifically addressing these types of workloads, the method provides targeted monitoring capabilities for a wide range of industrial and manufacturing applications, enhancing operational efficiency and reliability in these critical sectors.

Embodiments of the invention will be described, by way of example, with reference to the following drawings, in which:
FIG. 1 illustrates a flowchart for monitoring network system resources, according to an embodiment of the method according to the invention,
FIG. 2 depicts a flowchart for a discovery process of network system resources according to the embodiment depicted in Fig. 1, and
FIG. 3 shows a flowchart for a resource identification and tagging process according to the embodiment depicted in Fig. 1 and 2.

Common reference numerals are used throughout the figures to indicate similar features.

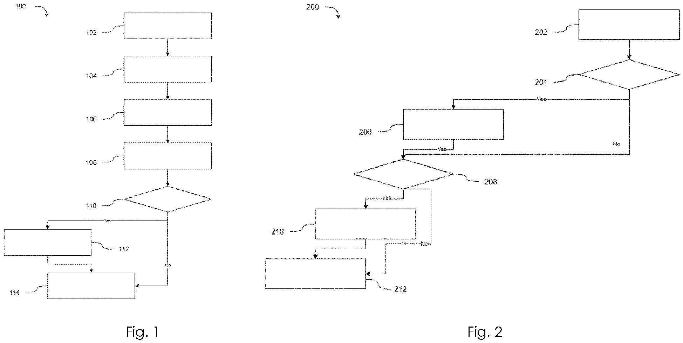

FIG 1 illustrates a flowchart for a method of monitoring network system resources. The method begins with a step 100 to identify workload as realtime workload. Realtime workload may include automation workload and/or industrial control workload and/or manufacturing workload and/ or communication workload.

Following the identification of realtime workload, a step 102 involves discovering network system resources by a discovery process. This discovery process allows for the identification and cataloging of various resources within the network system.

Once the network system resources are discovered, a step 104 attributes the realtime workload to the discovered network system resources that process the realtime workload. This attribution establishes a relationship between the workload and the specific resources handling it.

The method then proceeds to a step 106 where the network system resources are monitored distinctly addressing the realtime workload. This distinct monitoring allows for focused observation of resources specifically handling realtime tasks.

After monitoring resources for realtime workload, the method reaches a decision point 108 to determine if there is additional non-realtime workload. If additional non-realtime workload exists, the process moves to a step 110 where non-realtime workload is attributed to the discovered network system resources that process the non-realtime workload.

Regardless of whether additional non-realtime workload is present, the method concludes with a step 112 where resources discovered are monitored. This final step ensures comprehensive monitoring of network system resources, distinctly addressing both realtime and non-realtime workloads when applicable.

FIG 2 illustrates a flowchart for a discovery process of network system resources. The process begins with a start discovery process step 200. The start discovery process step 200 initiates the discovery of various resources within the network system.

Following the start discovery process step 200, the flowchart proceeds to a decision point 202. The decision point 202 determines whether to include computing resources in the discovery process. If the decision is affirmative, the process moves to a step for performing computing resource discovery 204. The step for performing computing resource discovery 204 involves identifying and cataloging computing resources within the network system. These computing resources may include processors, memory units, storage devices, and other computational components.

After the step for performing computing resource discovery 204, or if the decision at decision point 202 is negative, the process progresses to another decision point 206. The decision point 206 determines whether to include network IO resources in the discovery process. If the decision is affirmative, the process moves to a step for performing network IO resource discovery 208. The step for performing network IO resource discovery 208 involves identifying and cataloging network input/output resources within the system. These network IO resources may include network interfaces, communication ports, and other components related to data transmission and reception.

Following the step for performing network IO resource discovery 208, or if the decision at decision point 206 is negative, the process concludes with a step to complete discovery process 210. The step to complete discovery process 210 finalizes the resource discovery, ensuring that all identified resources are properly cataloged and ready for further use in the network system.

This discovery process allows for a comprehensive identification of both computing resources and network IO resources within the network system. By incorporating decision points for each type of resource, the process provides flexibility in tailoring the discovery to specific system requirements or configurations.

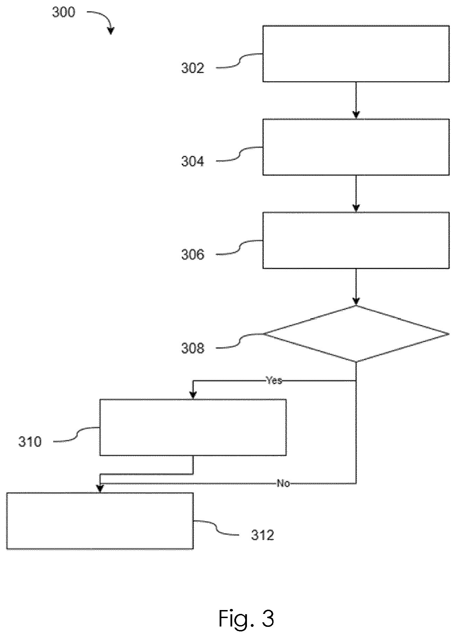

FIG 3 illustrates a flowchart for a resource identification and tagging process. The process begins with a step 300 where resource identification is initiated.

A step 302 involves tracking workload. This step includes using a workload manager, such as a Docker container engine, to manage realtime workloads. The workload manager facilitates the tracking and management of various workloads within the system.

Following the workload tracking, a step 304 identifies resources processing realtime workload. This identification is accomplished by tracking the workload as it is processed by different network system resources. A realtime workload tagger (RWTAG) is used to relate workloads to network IO resources and compute resources. This relationship establishment allows for precise identification of which resources are handling realtime tasks.

After the identification of resources processing realtime workload, the process reaches a decision point 306. At this decision point 306, a determination is made whether to tag the identified resources. If tagging is chosen, the process proceeds to a step 308 where resources are tagged for reference. The tagging process utilizes container name labels and project/app labels, such as Docker composer project names. These tags provide a means for later or continuing reference to the specific resources handling realtime workloads.

If tagging is not chosen at the decision point 306, the process bypasses the tagging step 308.

Both paths then converge at a step 310, where the resource identification and tagging process is completed. This final step ensures that all identified resources, whether tagged or not, are properly cataloged within the system.

This process of resource identification and optional tagging provides a structured approach to managing and monitoring resources specifically handling realtime workloads. By utilizing workload tracking and selective tagging, the system can efficiently allocate and monitor resources for optimal performance of realtime tasks.

In an alternative embodiment, the method includes using a realtime element telemetry exporter (RETEX) to export OS-level telemetry information about network and compute resource performance. The RETEX collects and processes performance data from various system components, providing a comprehensive view of the network and compute resources specifically related to realtime workloads.

In another embodiment, the method includes exporting performance information to user-provided monitoring systems. This allows for integration with existing monitoring infrastructure, enabling users to leverage familiar tools and dashboards for analyzing the performance of realtime workloads within their network systems.

In yet another embodiment, the method includes gathering and aggregating scheduling latencies using Linux eBPF technology. The Linux eBPF technology allows for dynamic insertion of metrics-gathering program code into specific trace points within the Linux kernel. This approach enables detailed analysis of scheduling latencies, providing valuable insights into the performance of realtime workloads at the operating system level.

## Claims

1. Method for monitoring network system resources, in which workload is identified as realtime workload (100) and in which network system resources are discovered by a discovery process (102), and in which the realtime workload is attributed to the discovered network system resources that process the realtime workload (104) and the monitoring of the network system resources distinctly addresses realtime workload (106).

2. Method according to the previous claim, in which workload is additionally identified as non-realtime workload and in which the non-realtime workload is attributed to the discovered network system resources that process the non-realtime workload (110) and the monitoring of the network system resources distinctly addresses also non-realtime workload (112).

3. Method according to one of the previous claims, wherein the network system resources comprise computing resources (204).

4. Method according to one of the previous claims, wherein the network system resources comprise network IO resources (208).

5. Method according to one of the previous claims, wherein the discovery process comprises a computing resource discovery process (204).

6. Method according to one of the previous claims, wherein the discovery process comprises a network IO resource discovery process (208).

7. Method according to one of the previous claims, wherein the discovered network system resources that process the realtime workload is identified by tracking the workload (302).

8. Method according to one of the previous claims, wherein the discovered network system resource/s that is/are identified to process the realtime workload is tagged for later or continuing reference (308).

9. Method according to one of the previous claims, wherein the realtime workload is automation workload.

10. Method according to one of the previous claims, wherein the realtime workload is industrial control workload and/or manufacturing workload and/or communication workload.
